# EUROPÄISCHE PATENTSCHRIFT

(11) **EP 3 482 844 B1**
(45) Veröffentlichungstag und Bekanntmachung des Hinweises auf die Patenterteilung: **01.01.2020**
(21) Anmeldenummer: 18199216.5
(22) Anmeldetag: 09.10.2018
(51) Int. Cl.: B21D 31/04, B60H 1/00

(54) **STRECKMETALL MIT MASCHEN UNTERSCHIEDLICHER MASCHENFORM**
EXPANDED METAL WITH MESHES OF DIFFERENT SIZES
MÉTAL ÉTIRÉ À MAILLES AYANT DIVERSES FORMES

(30) Priorität: 09.11.2017 DE 102017126315
(43) Veröffentlichungstag der Anmeldung: 15.05.2019
(73) Patentinhaber: GRAMMER Interior Components GmbH, 74736 Hardheim (DE)
(72) Erfinder: Kirchknopf, Heiko, 74864 Fahrenbach-Trienz (DE); Türk, Ralf, 74731 Walldürn (DE); Link, Gunter, 74722 Buchen - Hainstadt (DE); Schreck, Christian, 97953 Königheim (DE)
(74) Vertreter: Ostriga Sonnet Wirths & Vorwerk

(56) Entgegenhaltungen:
- EP-A1- 1 537 923
- EP-A2- 1 038 605

## Beschreibung

Die Erfindung betrifft ein Streckmetall, umfassend einen Bogen gestreckten Bleches mit im Wesentlichen materialverlustfrei eingebrachten Öffnungen in Form von Maschen, welche durch die Maschenbreite und die Maschenlänge sowie die Maschenform definiert sind, und mit die Maschen einfassenden Stegen, die durch die Stegbreite und die Stegdicke definiert sind, wobei mehrere Maschen in Bahnen hintereinander und Reihen nebeneinander angeordnet sind.

Streckmetall ist aus dem Stand der Technik hinlänglich bekannt. Es handelt sich um Blechbögen, welche eine Vielzahl von Öffnung aufweisen. Diese Öffnungen werden über ein sogenanntes Streckmesser in das Blech eingebracht, wobei dieses materialverlustfrei geschieht. Das Blech wird unter einem sich vertikal zur Blechebene auf und ab bewegenden und dabei seitwärts alternierend verschiebenden Streckmesser entlang gezogen. Das Streckmesser verfügt über eine zahnartige Kontur. Die Zähne des Streckmessers dringen in die Blechebene ein und verdrängen das Metall. Hierdurch verändern sich die Maße eines definierten Blechabschnitts insbesondere hinsichtlich dessen Länge, geringfügig auch in der Breite.

Die Maßveränderungen des gestreckten Bleches gegenüber dessen ungestreckten Ausgangsmaterials können, sofern diese nicht gleichmäßig erfolgen, zu starken Verformungen des gestreckten Bleches führen. Dies beeinträchtigt außerhalb enger Toleranzen die Weiterverarbeitung des Streckmetalls. Jenseits gewisser Toleranzen ist eine Nachbearbeitung erforderlich. Bei Überschreiten bestimmter Toleranzen entsteht, je nach Anwendungsfeld des Streckmetalls, Ausschuss. Mögliche ungleiche Maßveränderungen haben ihre Ursache insbesondere in unterschiedlichen Abnutzungsgraden der Zähne des Streckmessers.

Streckmetall findet in vielerlei Anwendungsbereichen Verwendung. Es dient als Fassadenverkleidung im Bau, wird für den Zaunbau benutzt, findet zu Sicht- und Abschirmzwecken Verwendung und wird unter anderem auch im Automobilbau verwendet.

EP 1 537 923 A1 zeigt ein Streckmetall, welches Zonen differierender Stabilität aufweist. Dies wird erreicht, indem die Vorschubgeschwindigkeit des Steckmetalls bei der Fertigung variiert wird. In Abhängigkeit von der Vorschubgeschwindigkeit lassen sich die Stegbreiten und somit die Stabilität beeinflussen. Die Veränderung der Vorschubgeschwindigkeit und hiermit die Veränderung der Stegbreiten hat jedoch keinen Einfluss auf die Maschengröße oder Maschenform, welche durch das Maß von Knotenpunkt zu Knotenpunkt der jeweiligen Masche bestimmt ist, da die Lage der Knotenpunkte unverändert bleibt.

EP 1 038 605 A2 zeigt zunächst eine Vorrichtung zur Fertigung von Streckmetallen. Das Messer dieser Vorrichtung zeigt Zähne, deren Zahnflanken unterschiedliche Winkel aufweisen. Die Zähne selbst sind gleichförmig ausgebildet, jedoch spiegelbildlich zueinander angeordnet. In Folge dessen sind Zahnflanken unterschiedlicher Zähne mit identischem Winkel einander zugewandt. Dieses Messer ermöglicht es, die Knotenpunkte einzelner Maschen zu schwächen oder zu durchtrennen, um das Streckmetall bei seiner Verarbeitung formen zu können.

Die Anforderungen an die Qualität des Streckmetalls im Automobilbau sind besonders hoch, da dort Streckmetall in der Regel als Interieur-Verkleidung im Innenbereich von Fahrzeugen Verwendung findet. Beispielsweise dient Streckmetall zur Abdeckung von Lautsprechern. Teilweise wird es jedoch auch großflächig eingesetzt, um Belüftungsöffnungen von Defrostern für die Windschutzscheibe oder sonstige Verglasungen im Pkw zu kaschieren.

Aufgabe der Erfindung ist es, den Einsatzbereich von Streckmetallen insbesondere im Automobilbau zu erweitern und hierfür ein Streckmetall mit neuen Eigenschaften zur Verfügung zu stellen.

Gelöst wird die Erfindung von einem Streckmetall mit den Merkmalen des Anspruchs 1, insbesondere mit dessen kennzeichnenden Merkmalen, wonach sich Bahnen erster Maschen von Bahnen zweiter Maschen durch die Maschenbreite und/oder die Maschenlänge voneinander unterscheiden, so dass der Streckmetallbogen mit unterschiedlich geformten Öffnungen und unterschiedlicher Maschenform versehen ist.

Das erfindungsgemäße Streckmetall zeichnet sich mit unterschiedlichen Maschenformen der Maschen unterschiedlicher Maschenbahnen zunächst durch eine vom Stand der Technik deutlich abweichende optische Gestaltung aus. Hierdurch werden neue optische Anmutungen für Innenraumverkleidungsteile aus Streckmetall möglich, die bislang insbesondere durch metallische Abdeckungen geschaffen wurden, die einer spanenden Bearbeitung, beispielsweise einem Stanz- oder Fräsprozess unterlagen. Die Verwendung des erfindungsgemäßen Streckmetalls hat gegenüber spanend bearbeiteten Metallabdeckungen insbesondere einen Kostenvorteil. Das erfindungsgemäße Streckmetall kann auch Streckmetallimitate aus Kunststoff ersetzen, welche bislang zur Erzielung bestimmter optischer Effekte genutzt wurden.

Dabei hat die Erfindung sich gegen das im Stand der Technik herrschende Vorurteil gewandt, dass uneinheitliche Zahngestaltungen des Streckmessers und daraus resultierende, uneinheitliche Maschen eine uneinheitliche Streckung des zu verarbeitenden Metalls und somit eine nicht beherrschbare Verformung des Streckmetallbogens hervorrufen. Nach Überwindung dieses Vorurteils ist klargeworden, dass definiert voneinander abweichende Zahngeometrien zwar - wie bei differierender Abnutzung im Stand der Technik - zu einer grundsätzlich nicht erwünschten Verformung des Streckmetallbogens führen. Es hat sich jedoch herausgestellt, dass diese Verformung, die aufgrund des definierten Abweichens von Zahngeometrien entsteht, berechenbar und somit während der Fertigung beherrschbar sowie im Zweifel durch einfache Nachbearbeitung kompensierbar ist.

Darüber hinaus hat die Erfindung einen zweiten wesentlichen Vorteil. Unterschiedliche Maschenformen führen nicht nur zu einer neuen, optischen Anmutung des Streckmetalls. Sie haben auch eine technische Wirkung, die gezielt eingesetzt werden kann. Ein das erfindungsgemäße Streckmetall durchtretender Luftstrom kann durch die Art der Maschenform beeinflusst werden. Es ist also möglich, das erfindungsgemäße Streckmetall im Innenraum von Fahrzeugen als Abdeckung für Luftauslässe zu verwenden und durch erfindungsgemäß unterschiedlich ausgebildete Maschenformen der Abdeckung die aus dem Luftauslass strömende Luft zu richten, um beispielsweise eine diffuse Luftströmung zu erzeugen oder die Luftströmung zur Erzielung beispielsweise einer optimierten Defrosterwirkung fächerartig auszulenken.

Es ist auch denkbar, das erfindungsgemäße Streckmetall bei Lautsprecherabdeckungen zu verwenden und, neben einer optischen Wirkung, die Schallrichtung bzw. die Schallausbreitung zu beeinflussen.

Das erfindungsgemäße Streckmetall führt also zu erweiterten Anwendungsfeldern durch neue optische Gestaltungsmöglichkeiten sowie technische Wirkungen.

Es ist vorgesehen, dass der Bogen in bahnförmige Abschnitte unterteilt ist, wobei jeder bahnförmige Abschnitt Maschenbahnen gleicher Maschenform umfasst, insbesondere wenn die Maschenform der Maschen eines ersten bahnförmigen Abschnittes spiegelbildlich zur Maschenform der Maschen eines zweiten bahnförmigen Abschnittes ausgebildet ist.

Das erfindungsgemäße Streckmetall lässt sich als Defrosterabdeckung mit integrierter Luftverteileinrichtung insbesondere dann sehr gut einsetzen, wenn wenigstens drei bahnförmige Abschnitte vorhanden sind, ein mittlerer Abschnitt Maschen einer ersten Maschenform aufweist und die Maschen der jeweils seitlich des mittleren Abschnitts gelegenen Bahnen spiegelbildlich zueinander ausgebildet sind.

Es ist jedoch auch denkbar, dass jede Maschenbahn eine von benachbarten Bahnen abweichende Maschenform aufweist, insbesondere, wenn die sich die Maschenformen der jeweiligen Maschenbahnen von einer ersten äußeren Bahn mit maximal in einer Richtung verzerrter Maschenform über eine mittlere Bahn mit symmetrischer Maschenform zu einer zweiten äußeren Bahn mit in Gegenrichtung maximal verzerrter Maschenform wandeln.

Eine solche Ausgestaltung eignet sich insbesondere für eine sehr feine, fächerförmige Aufteilung eines das Streckmetall durchtretenden Luftstromes und so zu einer sehr diffusen, zugfreien Luftströmung.

Die erfindungsgemäße Aufgabe wird auch gelöst von einer Abdeckung für die PKW Innenausstattung, insbesondere zur Abdeckung von Lüftungs- und Gebläseöffnungen, wie Defroster oder Belüftungseinlässe, gefertigt aus einem Streckmetallbogen nach zumindest einem der Ansprüche 1 bis 6.

Hier macht sich die Erfindung insbesondere die vielfältigen Möglichkeiten des erfindungsgemäßen Streckmetalls zur Ausrichtung von Luftströmungen zu Nutze, da die Maschenform einzelner Maschenbahnen oder die Maschenform der Maschen bahnförmiger Abschnitte die Strömungsrichtung der die Abdeckung durchströmenden Luft bestimmt.

Eine Lösung im Sinne der Aufgabe stellt auch eine Vorrichtung zur Herstellung von Streckmetallen nach einem der Ansprüche 1 bis 6 dar mit einem Vorzug, welcher ein Metallblech in Vorzugsschritten einem Streckmesser zuführt, wobei das Streckmesser eine horizontale und quer zur Vorzugsrichtung des Metallbleches alternierend geführte Bewegungskomponente aufweist und mit einer Vielzahl von Zähnen versehen ist, welche zur Erstellung von Maschen unter einer vertikalen Bewegungskomponente in das Metallblech eintauchen, dadurch gekennzeichnet, dass das Streckmesser Zähne mit unterschiedlicher Form und/oder Ausrichtung zu benachbarten Zähnen aufweist.

Eine solche Vorrichtung ermöglicht es insbesondere, das eingangs als vorteilhaft beschriebene, erfindungsgemäße Streckmetall herzustellen.

Je nach gewünschter Ausprägung des zu fertigenden Streckmetalls ist es vorteilhaft, wenn Zähne gleicher Form und/oder Ausrichtung gruppiert angeordnet sind, wobei insbesondere vorgesehen ist, dass die Zähne einer ersten Gruppe spiegelbildlich zu den Zähnen einer zweiten Gruppe angeordnet oder ausgeformt sind.

Es kann darüber hinaus vorgesehen sein, dass sich die Ausrichtung der Zähne des Streckmessers, ausgehend von einem ersten Randzahn über einen Mittelzahn bis zu einem zum ersten Randzahn entfernt angeordneten, zweiten Randzahn kontinuierlich ändert, wobei gleich weit vom Mittelzahn entfernte Zähne spiegelbildlich zueinander ausgerichtet ist.

Vorgesehen ist darüber hinaus, dass sich die Zahnformen der Zähne des Streckmessers, ausgehend von einem ersten Randzahn über einen Mittelzahn bis zu einem zum ersten Randzahn entfernt angeordneten, zweiten Randzahn kontinuierlich ändern, wobei gleich weit vom Mittelzahn entfernte Zähne spiegelbildlich zueinander ausgeformt sind.

Weitere Vorteile der Erfindung sowie ein besseres Verständnis folgt aus der Beschreibung verschiedener Ausführungsformen. Es zeigen:
Fig. 1 die schematische Darstellung der Streckmetallfertigung gemäß Stand der Technik,
Fig. 2 ein Streckmesser gemäß Stand der Technik zur Herstellung von Streckmetall gemäß Fig. 1,
Fig. 3 ein erstes erfindungsgemäßes Streckmesser zur Herstellung von erfindungsgemäßem Streckmetall,
Fig. 4 ein zweites erfindungsgemäßes Streckmesser zur Herstellung von erfindungsgemäßem Streckmetall,
Fig. 5 die Darstellung eines Bogens erfindungsgemäßen Streckmetalls,
Fig. 6 eine Ausschnittsvergrößerung gemäß Ausschnittsrechteck VI in Fig. 5,
Fig. 7 das erfindungsgemäße Streckmetall gemäß Fig. 5 mit Darstellung von Luftströmungen,
Fig. 8 die Ausschnittsvergrößerung gemäß Fig. 6 mit Darstellung von Luftströmungen und
Fig. 9 und 10 schematische Darstellung eines weiteren, erfindungsgemäßen Streckmetalls.

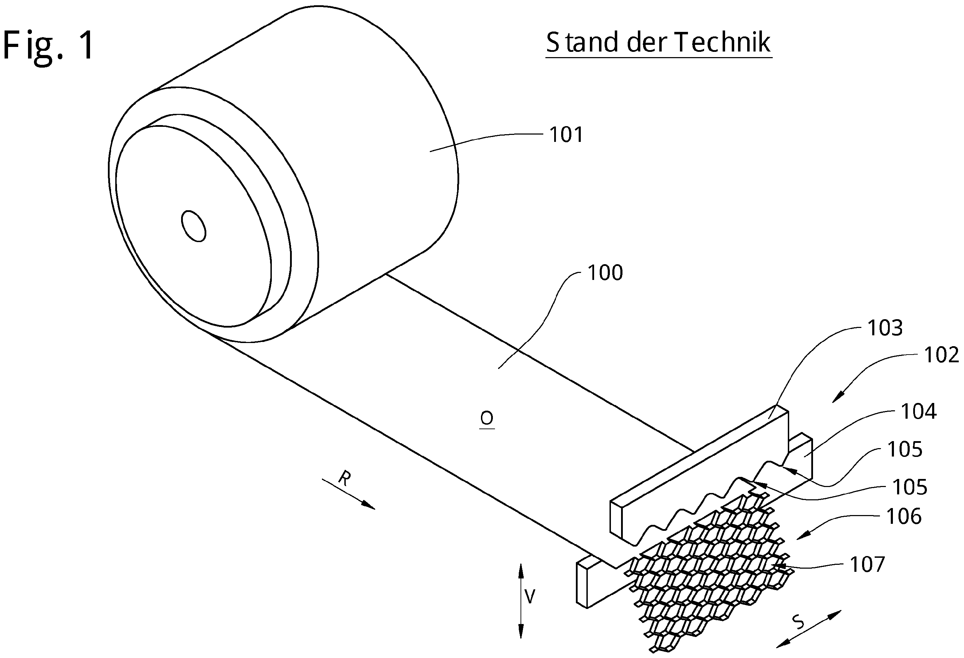

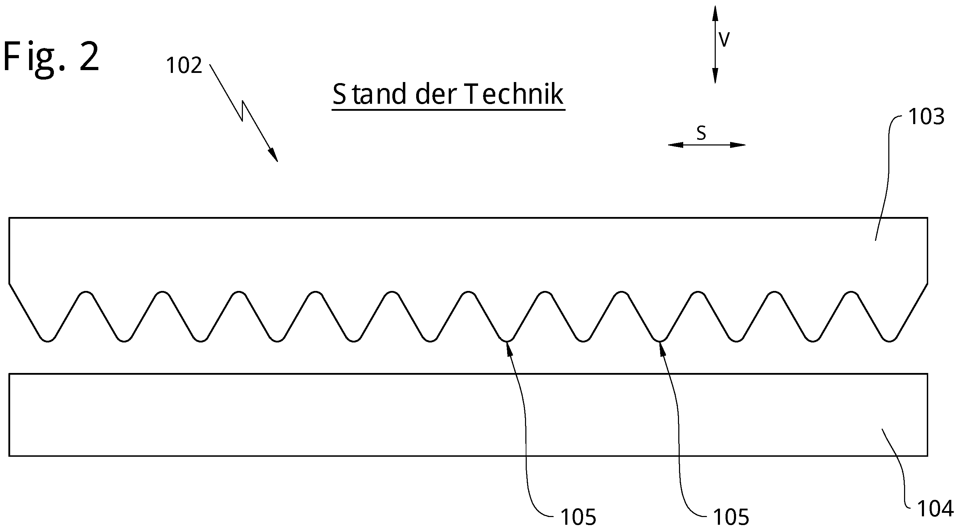

In den Figuren 1 und 2 ist der Stand der Technik dargestellt. Ein auf einer Rolle 101 aufgerolltes Metallblech 100 wird einer Streckeinrichtung 102 zugeführt, welche hier lediglich schematisch dargestellt ist. Diese Streckeinrichtung 102 besteht aus einem Streckmesser 103 und einem Widerlager 104 für das Metallblech 100. Das Streckmesser 103 bewegt sich in Vertikalrichtung V zur Blechoberfläche O auf und ab sowie in Seitwärtsrichtung S alternierend hin und her. Hierbei tauchen die Zähne 105 des Streckmessers 103 in das Metallblech 100 ein und verdrängen Blechmaterial - auch unter einer gewissen Umformung - insbesondere quer zur Seitwärtsrichtung S, in Richtung der sogenannten Streckrichtung R. In geringem Maße erfährt das Metallblech 100 auch eine Streckung in Seitwärtsrichtung S. So verlässt das Metallblech 100 die Streckeinrichtung 102 als Streckmetall 106.

Die dargestellte Streckeinrichtung 102 ist ebenfalls zwar schematisch, jedoch etwas detaillierter in Figur 2 gezeigt. Besonderes Augenmerk ist hier auf das Streckmesser 103 gemäß Stand der Technik zu legen. Dieses verfügt über eine Reihe nebeneinander angeordneter Streckzähne 105. Diese sind von gleicher Zahngeometrie und identischer Zahnausrichtung. Dies ist für die Streckmetallfertigung gemäß gängigen Vorstellungen im Stand der Technik von erheblicher Bedeutung, um eine möglichst gleichmäßige Streckung des Metalls durch das Einbringen identischer Maschen 107 zu gewährleisten. Nur so ist gewährleistet, dass ein qualitativ hochwertiges Streckmetall mit möglichst geringem Verzug die Streckeinrichtung verlässt, welches nach Möglichkeit keiner oder lediglich einer geringen Nachbearbeitung bedarf.

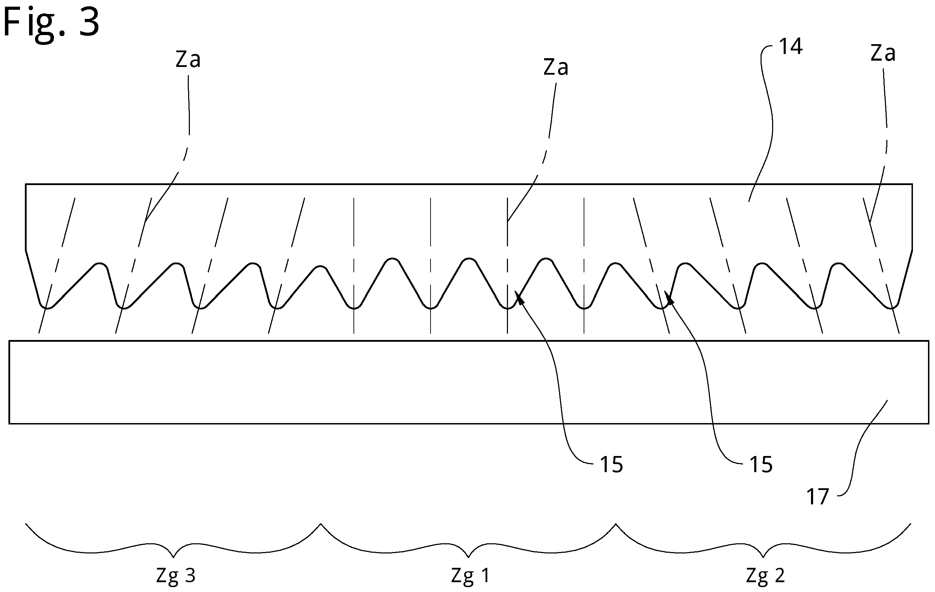

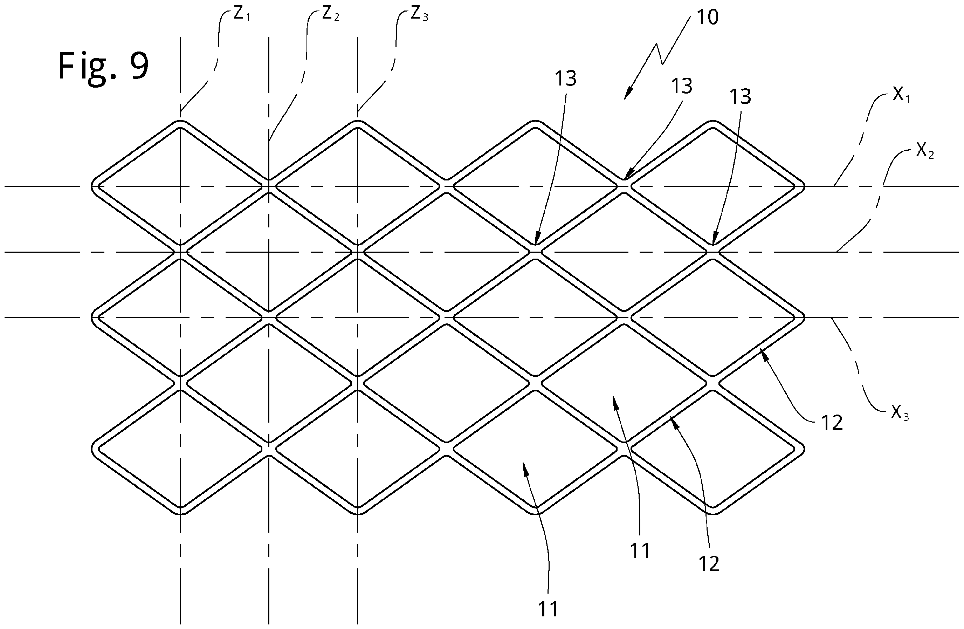

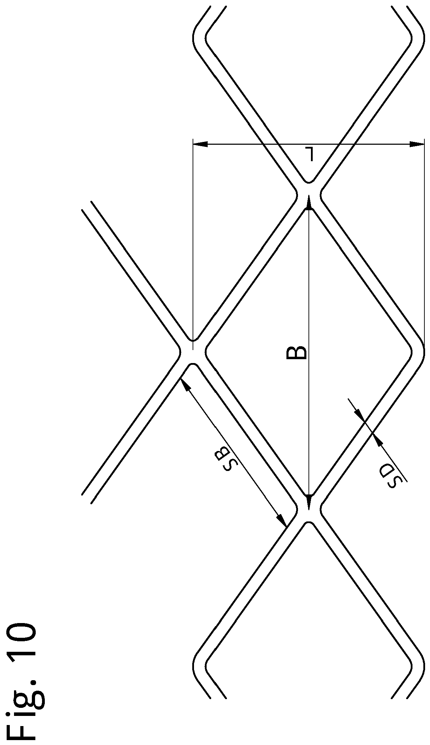

In den Figuren 3 bis 10 ist ein erfindungsgemäßes Streckmetall insgesamt mit der Bezugsziffer 10 versehen. Dieses Streckmetall 10 ist ausschnittsweise und schematisch in den Figuren 9 und 10 dargestellt. Das Streckmetall 10 besteht aus einer Vielzahl von Maschen 11, die von Stegen 12 eingefasst sind. Die Stege 12 bestehen aus dem Ausgangsmaterial, in der Regel aus Metall. Dort wo mascheneinfassende Stege 12 aufeinandertreffen, bilden diese einen Knoten 13. Das Streckmetall 10 wird von einer Vielzahl von Maschen 11 gebildet, die in Reihen X₁ bis X_{N} nebeneinander und Maschenbahnen Z₁ bis Z_{N} hintereinander angeordnet sind. Die Maschenform wird definiert durch die Maschenlänge L und die Maschenbreite B, wobei hier jeweils von Knotenmitte zu Knotenmitte gemessen wird. Weitere Kennzahlen sind die Stegbreite Sb sowie die Stegdicke Sd der die Maschen 11 einfassenden Stege 12.

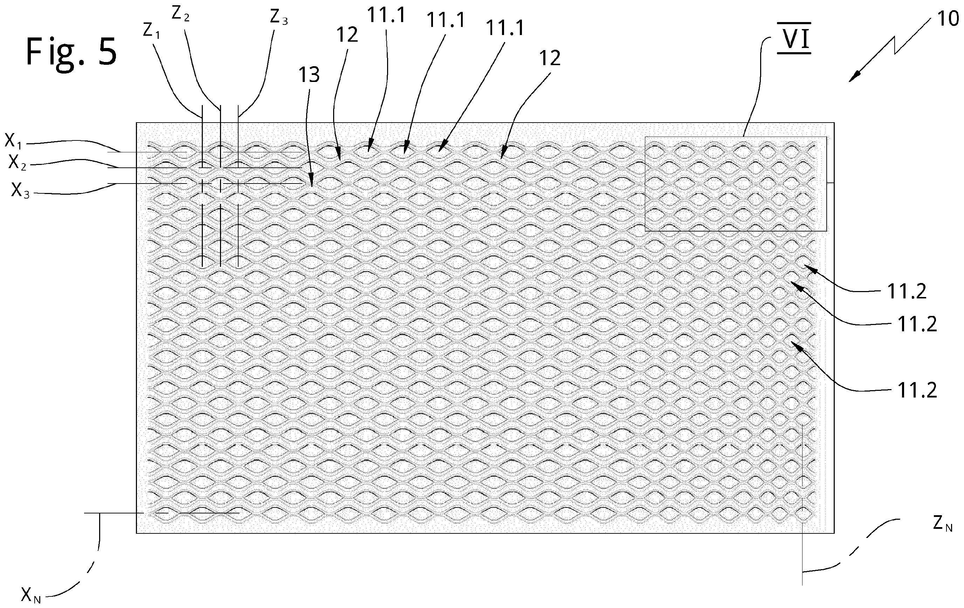

Das erfindungsgemäße Streckmetall 10 ist zunächst in einer Übersichtsdarstellung in Figur 5 gezeigt. Es besteht aus einer Vielzahl in Reihen X₁ bis X_{N} nebeneinander und Bahnen Z₁ bis Z_{N} hintereinander angeordneter Maschen 11, welche durch Stege 12 voneinander getrennt sind. Auch hier treffen sich die Stege 12 in Knoten 13. Bereits aus der Übersichtsdarstellung in Figur 5 ist ersichtlich, dass die Maschen 11 nicht durchgängig gleichartig geformt sind. Das in Figur 5 dargestellte Streckmetall 10 wird zunächst von einer Vielzahl von Maschen 11.1 erster Form gebildet, welche eine gestreckte Rautenform aufweisen. Im hinsichtlich der Zeichnungsebene rechten Randbereich sind jedoch Maschen 11.2 zweiter Form im Streckmetall 10 gebildet. Auch diese weisen hier eine in etwa rautenförmige Geometrie auf, welche jedoch im Vergleich zu den Maschen 11.1 erster Form gestaucht ist.

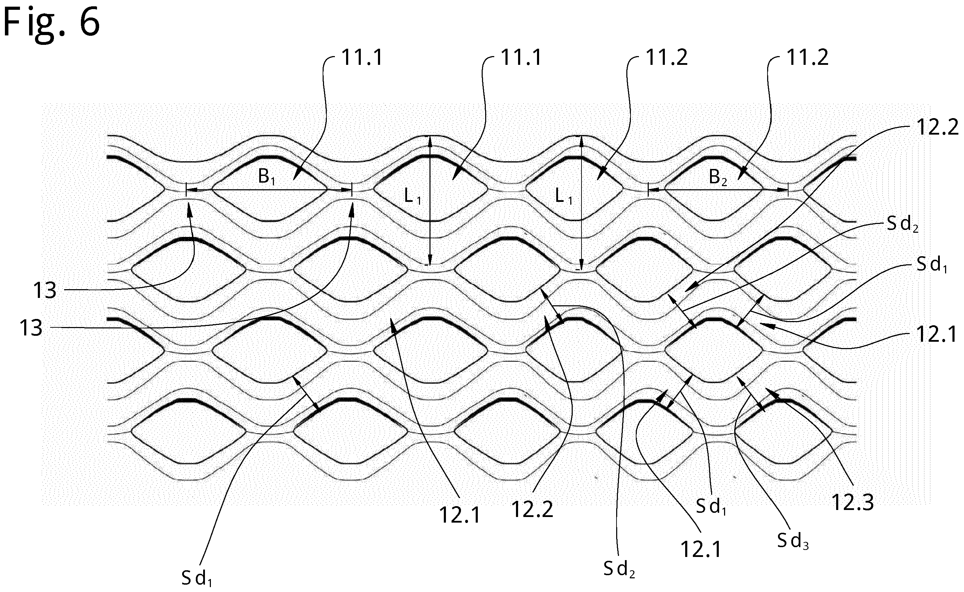

Dies geht noch einmal deutlich aus Figur 6 hervor, welche eine Vergrößerung des Ausschnitts VI in Figur 5 ist. Die Maschen 11.1 erster Form weisen eine von Knotenmittelpunkt zu Knotenmittelpunkt gemessene Breite B₁ auf, die Maschen zweiter Form 11.2 haben eine Maschenbreite B₂. Dabei ist die Maschenbreite B₂ kleiner als die Maschenbreite B₁. Die Länge der Maschen erster Form 11.1 ist mit ihrer Länge Li hingegen identisch zur Länge Li der Maschen zweiter Form 11.2.

Die unterschiedliche Maschenbreite B folgt aus einer entsprechend unterschiedlichen Zahngeometrie eines Zahnes 15 eines erfindungsgemäßen Streckmessers 14. Der Zahn 15 zur Erstellung einer Masche zweiter Form 11.2 ist weniger breit als den Zahn 15 zur Erstellung einer Masche erster Form 11.1.

Der wesentliche Vorteil bei der Beibehaltung einer identischen Länge L₁ bei Maschen erster und zweiter Form 11.1 und 11.2 ist darin zu sehen, dass die Längenausdehnung bei der Erstellung des Streckmetalls 10 zwischen nebeneinander in Reihen X₁ bis X_{N} liegenden Maschen 11 trotz abweichender Geometrien identisch ist und somit eine nachteilige Verformung des Streckmetalls 10 in engen Grenzen gehalten werden kann.

Figur 6 zeigt jedoch eine weitere, zusätzliche Eigenschaft des erfindungsgemäßen Streckmetalls 10, welche die Ausformung der die Maschen 11 begrenzenden Stege 12 betrifft. Maschen erster Form 11.1 werden einheitlich von Stegen 12.1 eingerahmt. Diese verfügen über eine Stegdicke Sdi. Die Ausschnittsvergrößerung des Streckmetalls 10 in Figur 6 vermittelt deshalb den Eindruck, dass Maschen erster Form 11.1 in etwa zentriert zwischen vier angrenzenden Knoten 13 angeordnet sind.

Die Maschen zweiter Form 11.2 hingegen werden voneinander diametral gegenüberliegenden Stegen 12.2 und 12.3 sowie ebenfalls einander diametral gegenüberliegenden Stegen 12.1 eingerahmt. Die Stege 12.2 verfügen über eine Stegdicke Sd₂, die Stege 12.3 über eine Stegdicke Sd₃. Die Stege 12.1 weisen auch hier die Stegdicke Sdi auf.

In Folge dessen erscheinen die Maschen zweiter Form 11.2 hinsichtlich der Papierebene und in Relation zu vier benachbarten, die Masche 11.2 einfassenden Knoten, die Masche 11.2 sei deutlich nach links und leicht nach oben versetzt. Dieser Versatz rührt aus einer abweichenden Zahnanordnung.

Im Hinblick auf das erfindungsgemäße Streckmetall 10 sei angemerkt, dass voneinander abweichende Maschenformen zwar zwangsläufig abweichende Stegmaße zur Folge haben, hier jedoch zu vorderst abweichende Stegbreiten Sb zu erwarten sind. Ein Abweichen der Stegdicken Sd ist somit nicht zwingend erforderlich, um unterschiedliche Maschenformen im Streckmetall zu erzeugen, sondern ein zusätzliches, optionales Merkmal des erfindungsgemäßen Streckmetalls 10.

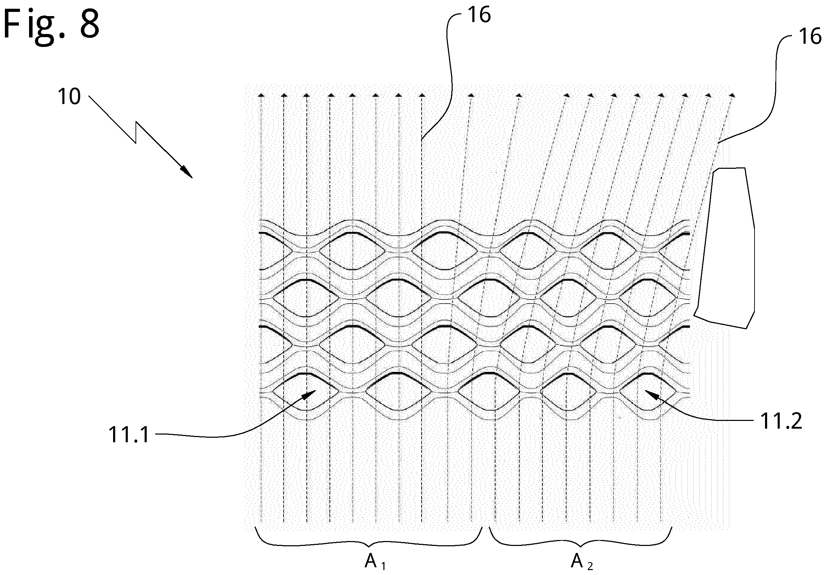

Wie insbesondere aus Figur 8 hervorgeht, haben die unterschiedlichen Stegdicken Sd, beispielsweise hervorgerufen durch eine abweichende Zahnausrichtung, einen besonderen, technischen Effekt. Figur 8 zeigt zunächst einen der Figur 6 ähnlichen Ausschnitt aus dem Streckmetall gemäß Figur 5. Die Maschen 11.1 erster Form bilden einen ersten Abschnitt A₁, die Maschen zweiter Form 11.2 bilden einen zweiten Abschnitt A₂. Durch die abweichende Maschenform und/oder abweichende Steggeometrien kann ein Einfluss auf eine über Pfeile 16 symbolisierte Luftströmung genommen werden, wenn Belüftungsluft durch das erfindungsgemäße Streckmetall 10 hindurchgeblasen wird. Wie durch die Pfeile 16 angedeutet, führen veränderte Maschen- und/oder Steggeometrien zu einer Ablenkung der Luftströmung 16. Ist die Luftströmung 16 im Hinblick auf die Darstellungsebene im Abschnitt A₁ in Figur 8 vertikal gerichtet, so wird sie im Abschnitt A₂, gebildet durch Maschen zweiter Form 11.2 aus der Vertikalen nach rechts abgelenkt. Auf diese Weise wird in Abhängigkeit von der absoluten Maschengröße der Maschen 11.1 und 11.2 eine sehr fein aufgefächerte, diffuse Luftströmung erreicht.

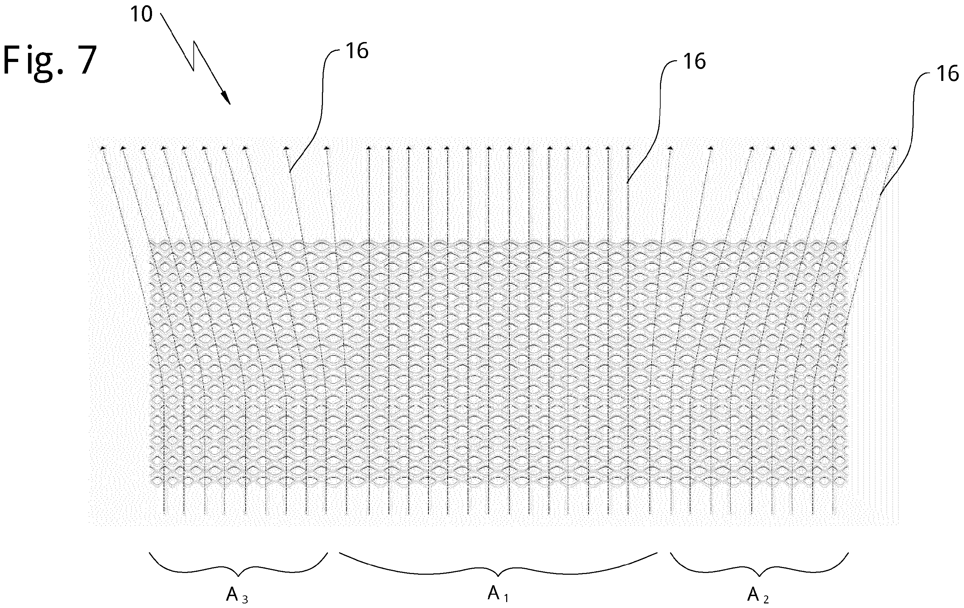

Dieser Effekt kann beispielsweise für ein erfindungsgemäßes Streckmetall 10 gemäß Figur 7 verwendet werden. Hier ist das Streckmetall 10 wiederum in Abschnitte A₁ und A₂ aufgeteilt. Zusätzlich verfügt es über einen Abschnitt A₃. Jeder Abschnitt A₁ bis A₃ beinhaltet Maschen 11 gleicher Form, die in Reihen nebeneinander und Bahnen hintereinander angeordnet sind. Die Maschenformen zwischen den einzelnen Abschnitten A₁ bis A₃ unterscheiden sich jedoch voneinander. Dabei ist zu beachten, dass die Maschenform von Maschen 11 des Abschnitts A₂ sich spiegelbildlich ausgerichtet im Abschnitt A₃ wiederfindet. Auf diese Weise erzeugt der Abschnitt A₁ im Hinblick auf die Papierebene eine im Wesentlichen vertikal gerichtete Luftströmung. In den Abschnitten A₂ und A₃ wird die Luftströmung 16 hingegen nach rechts bzw. nach links ausgelenkt. Auf diese Weise ist es möglich, das in Figur 7 dargestellte Streckmetall 10 beispielsweise als Abdeckung für eine Defrostereinrichtung im Bereich der Windschutzscheibe eines Fahrzeugs anzuordnen. Solche Abdeckungen im Bereich der Windschutzscheibe aus Streckmetall sind zwar grundsätzlich bekannt. Durch die unterschiedlichen Maschenformen ergibt sich jedoch die Möglichkeit, den optischen Eindruck zu verändern.

Wesentlich ist jedoch der zuvor beschriebene Effekt auf die Luftströmung 16 des erfindungsgemäßen Streckmetalls 10. Im Gegensatz zum Stand der Technik kann mit dem erfindungsgemäßen Streckmetall 10 der aus der Zuluftöffnung des Defrosters austretende Luftstrom 16 verteilt und über die Windschutzscheibenbreite gerichtet werden, wozu im Stand der Technik unterhalb der dortigen Abdeckung separate Luftleit- und Luftdiffusionseinrichtungen erforderlich waren.

Selbstverständlich sind weitere Einsatzzwecke für ein derart erfindungsgemäß ausgestaltetes Streckmetall 10 denkbar. Auch andere Luftauslässe können mit einer solchen Abdeckung versehen werden, um die austretende Luftströmung 16 zu richten. Auch ist es denkbar, dass der Einsatz solcher Streckmetalle als Lautsprecherabdeckungen dazu geeignet ist, den Schallaustritt zu beeinflussen.

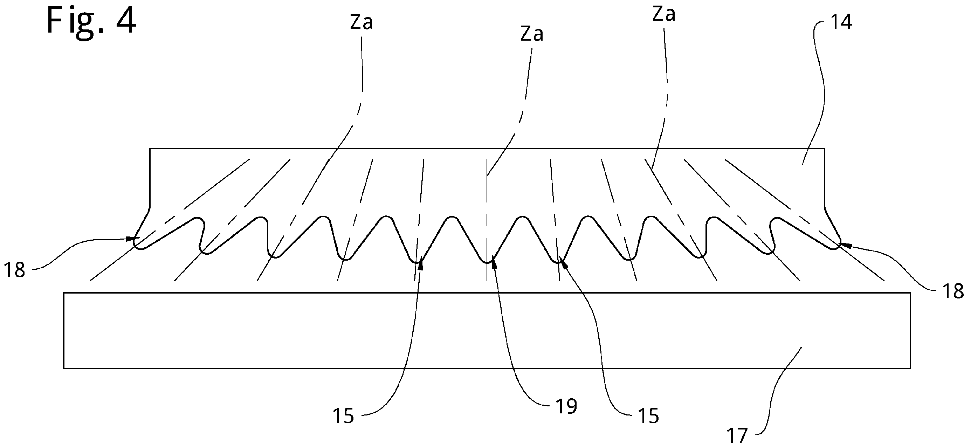

Teil der Erfindung ist auch ein neuartiges Streckmesser, welches insgesamt mit der Bezugsziffer 14 versehen ist. Das erfindungsgemäße Streckmesser 14 ist in zwei unterschiedlichen Ausführungsformen in den Figuren 3 und 4 dargestellt. Auch das erfindungsgemäße Streckmesser 14 wirkt mit einem Widerlager 17 zusammen, um das Streckmetall 10 zu fertigen. Es verfügt darüber hinaus über eine Vielzahl von Zähnen 15.

In Figur 3 sind gleichartig geformte und/oder gleichartig ausgerichtete Zähne 15 in Zahngruppen Zg₁ bis Zg₃ angeordnet. Die Zähne 15 weisen sogenannte Zahnachsen Za auf, die bei rotationssymmetrischen Zähnen 15 beispielsweise die Symmetrieachse sein kann. Figur 3 zeigt, dass die Zahnachsen Za von Zähnen 15 innerhalb der Zahngruppen Zg₁ bis Zg₃ parallel zueinander ausgerichtet sind, die Ausrichtung der Zahnachsen Za zwischen den Zahngruppen Zg₁ bis Zg₃ jedoch voneinander abweicht. Dabei sind die Zahnachsen Za der Gruppe Zg₂ zu den Zahnachsen Za der Gruppe Zg₃ spiegelbildlich ausgebildet. Die Zahngruppen Zg₃ und Zg₂ bilden gleichsam die Zahnrandgruppen, wobei die Zahngruppe Zg₁ zwischen den Zahngruppen Zg₂ und Zg₃ angeordnet ist.

Ein erfindungsgemäßes Streckmesser 14 gemäß Figur 3 würde demnach ein Streckmetall 10 fertigen, bei welchem Maschen unterschiedlicher Form in Reihen nebeneinander und Bahnen hintereinander in Abschnitten A₁, A₂ und A₃ angeordnet sind. Gleichwohl stellt das erfindungsgemäße Streckmesser 14 in Figur 3 nicht zwingend dasjenige Streckmesser 14 dar, welches zur Herstellung des in den Figuren 5 bis 10 vorbeschriebenen, erfindungsgemäßen Streckmetalls 10 zu verwenden ist.

In Figur 4 ist ein weiteres erfindungsgemäßes Streckmesser 14 dargestellt, jedoch in einer alternativen Ausführungsform. Auch hier sind die Zahnachsen Za der einzelnen Zähne 15 dargestellt. Beim erfindungsgemäßen Streckmesser gemäß Figur 4 verfügt jedoch jeder Zahn 15 über eine eigene Ausrichtung. Die äußeren Zähne 15 sind gleichsam auch die Randzähne 18, der mittlere Zahn 15 bildet den sogenannten Mittelzahn 19. Ausgehend vom Mittelzahn 19 in Richtung Streckmesserrand ändert sich die Ausrichtung der Zahnachse Za des jeweiligen Zahnes 15 bis hin zum jeweiligen Randzahn 18 kontinuierlich und somit ändert sich auch die Ausrichtung des jeweiligen Zahnes 15 kontinuierlich. Dabei ist die Ausrichtung von Zähnen 15, die eine gleiche Entfernung vom Mittelzahn 19 aufweisen, spiegelbildlich. Wird mit einem Streckmesser 14 gemäß Figur 4 ein Streckmetall 10 hergestellt, so ist die Form einzelner Maschen 11 innerhalb einer jeden Maschenbahn Z identisch, die Maschen 11 unterschiedlicher Maschenbahnen Z unterscheiden sich in ihrer Form jedoch voneinander.

Ausgehend von einer mittleren Maschenbahn Z mit einer Maschengrundform wird mit jeder in Richtung Streckmetallrand gelegenen Maschenbahn Z die Maschengrundform einseitig verzerrt, wobei gleichweit von einer mittleren Maschenbahn Z entfernt angeordnete Maschenbahnen Z spiegelbildlich ausgebildete Maschenformen aufweisen.

Je nach Maschenform und -ausrichtung kann mit einem solchen Streckmetall 10 ein Luftstrom 16 besonders fein aufgefächert oder aber gebündelt werden.

Auch zum Streckmesser 14 gemäß Figur 4 sei klargestellt, dass die Zahngeometrie und -ausrichtung nicht notwendigerweise dafür geeignet ist, das erfindungsgemäße Streckmetall 10 gemäß den Figuren 5 bis 10 herzustellen. Auch hier dient die schematische Darstellung ausschließlich der Erläuterung der Möglichkeiten, die ein erfindungsgemäßes Streckmesser 14 bietet.

### Bezugszeichenliste

- 100: Metallblech
- 101: Rolle
- 102: Streckeinrichtung
- 103: Streckmesser
- 104: Widerlager
- 105: Zähne des Streckmessers 103
- 106: Streckmetall
- 107: Masche
- 108: Steg

- 10: Streckmetall
- 11: Maschen
- 11.1: Maschen erster Form
- 11.2: Maschen zweiter Form
- 12: Steg
- 13: Knoten
- 14: Streckmesser
- 15: Zahn
- 16: Luftströmung
- 17: Widerlager
- 18: Randzahn
- 19: Mittelzahn

- A: Abschnitt
- V: Vertikalrichtung
- O: Oberfläche des Streckmessers 103
- S: Seitwärtsrichtung
- R: Streckrichtung
- X: Maschenreihen
- Z: Maschenbahn
- L: Maschenlänge
- B: Maschenbreite
- Sb: Stegbreite
- Sd: Stegdicke
- Zg: Zahngruppe
- Za: Zahnachse

## Patentansprüche

1. Streckmetall (10), umfassend einen Bogen gestreckten Bleches mit im Wesentlichen materialverlustfrei eingebrachten Öffnungen in Form von Maschen (11), welche durch die Maschenbreite (B) und die Maschenlänge (L) sowie die Maschenform definiert sind, und mit die Maschen einfassenden Stegen (12), die durch die Stegbreite (Sb) und die Stegdicke (Sd) definiert sind, wobei mehrere Maschen (11) in Bahnen (Z) hintereinander und Reihen (X) nebeneinander angeordnet sind, **dadurch gekennzeichnet, dass** sich Bahnen (Z) erster Maschen (11.1) von Bahnen (Z) zweiter Maschen (11.2) durch die Maschenbreite (B) und/oder die Maschenlänge (L) voneinander unterscheiden, so dass der Streckmetallbogen mit unterschiedlich geformten Öffnungen und unterschiedlicher Maschenform versehen ist.

2. Streckmetall (10) nach Anspruch 1, **dadurch gekennzeichnet, dass** der Bogen in bahnförmige Abschnitte (A) unterteilt ist, wobei jeder bahnförmige Abschnitt (A) Maschenbahnen (Z) gleicher Maschen- und Öffnungsform form umfasst.

3. Streckmetall (10) nach Anspruch 2, **dadurch gekennzeichnet, dass** die Maschen- und Öffnungsform der Maschen (11) eines ersten bahnförmigen Abschnittes (A) spiegelbildlich zur Maschen- und Öffnungsform der Maschen (11) eines zweiten bahnförmigen Abschnittes (A) ausgebildet ist.

4. Streckmetall (10) nach Anspruch 3, **dadurch gekennzeichnet, dass** wenigstens drei bahnförmige Abschnitte (A₁, A₂, A₃) vorhanden sind, ein mittlerer Abschnitt (A₁) Maschen (11) mit einer ersten Maschen- und Öffnungsform aufweist und die Maschen (11) der jeweils seitlich des mittleren Abschnitts (A₂, A₃) gelegenen Bahnen hinsichtlich Öffnungs- und Maschenform (Z) spiegelbildlich zueinander ausgebildet sind.

5. Streckmetall (10) nach Anspruch 1, **dadurch gekennzeichnet, dass** jede Maschenbahn (Z) eine von benachbarten Bahnen (Z) abweichende Maschen- und Öffnungsform aufweist.

6. Streckmetall (10) nach Anspruch 5, **dadurch gekennzeichnet, dass** die sich die Maschen- und Öffnungsformen der jeweiligen Maschenbahnen (Z) von einer ersten äußeren Bahn (Z) mit maximal in einer Richtung verzerrter Maschen- und Öffnungsform über eine mittlere Bahn (Z) mit symmetrischer Maschen- und Öffnungsform zu einer zweiten äußeren Bahn (Z) mit in Gegenrichtung maximal verzerrter Maschen- und Öffnungsform wandeln.

7. Abdeckung für die Pkw-Innenausstattung, insbesondere zur Abdeckung von Lüftungs- und Gebläseöffnungen, wie Defroster oder Belüftungseinlässe, gefertigt aus einem Streckmetallbogen nach zumindest einem der Ansprüche 1 bis 6.

8. Abdeckung nach Anspruch 7, **dadurch gekennzeichnet, dass** die Maschen- und Öffnungsform einzelner Maschenbahnen (Z) oder die Maschen- und Öffnungsform der Maschen (11) bahnförmiger Abschnitte (A) die Strömungsrichtung (16) der die Abdeckung durchströmenden Luft bestimmt.

9. Vorrichtung zur Herstellung von Streckmetall nach einem der Ansprüche 1 bis 6, mit einem Vorzug, welcher ein Metallblech in Vorzugsschritten einem Streckmesser (14) zuführt, wobei das Streckmesser (14) eine horizontale und quer zur Vorzugsrichtung des Metallbleches alternierend geführte Bewegungskomponente aufweist und mit einer Vielzahl von Zähnen (15) versehen ist, welche zur Erstellung von Maschen (11) unter einer vertikalen Bewegungskomponente in das Metallblech eintauchen, wobei das Streckmesser (14) Zähne (15) mit unterschiedlicher Form und/oder Ausrichtung zu benachbarten Zähnen (15) aufweist, **dadurch gekennzeichnet, dass** Zähne (15) gleicher Form und/oder Ausrichtung gruppiert angeordnet sind und dass die Zähne (15) einer ersten Gruppe (Zg₁) spiegelbildlich zu den Zähnen (15) einer zweiten Gruppe (Zg₂) angeordnet oder ausgeformt sind.

10. Vorrichtung nach Oberbegriff des Anspruchs 9, **dadurch gekennzeichnet, dass** sich die Ausrichtung der Zähne (15) des Streckmessers (14), ausgehend von einem ersten Randzahn (18) über einen Mittelzahn (19) bis zu einem zum ersten Randzahn (18) entfernt angeordneten, zweiten Randzahn (18) kontinuierlich ändert, wobei gleich weit vom Mittelzahn (19) entfernte Zähne (15) spiegelbildlich zueinander ausgerichtet ist.

11. Vorrichtung nach Oberbegriff des Anspruchs 9, **dadurch gekennzeichnet, dass** sich die Zahnformen der Zähne (15) des Streckmessers (14), ausgehend von einem ersten Randzahn (18) über einen Mittelzahn (19) bis zu einem zum ersten Randzahn (18) entfernt angeordneten, zweiten Randzahn (18) kontinuierlich ändern, wobei gleich weit vom Mittelzahn (19) entfernte Zähne (15) spiegelbildlich zueinander ausgeformt sind.

## Claims

1. Expanded metal (10), comprising a sheet of expanded sheet metal having openings in the form of meshes (11) which are formed substantially without any loss of material and which are defined by the mesh width (B) and the mesh length (L) and also the mesh shape, and having webs (12) which surround the meshes and which are defined by the web width (Sb) and the web thickness (Sd), wherein multiple meshes (11) are arranged one behind the other in courses (Z) and one next to the other in rows (X), **characterized in that** courses (Z) of first meshes (11.1) from courses (Z) of second meshes (11.2) differ from one another by the mesh width (B) and/or the mesh length (L), so that the expanded metal sheet is provided with differently shaped openings and different mesh shapes.

2. Expanded metal (10) according to claim 1, **characterized in that** the sheet is divided into course-like sections (A), wherein each course-like section (A) comprises mesh courses (Z) of identical mesh and opening shape.

3. Expanded metal (10) according to claim 2, **characterized in that** the mesh and opening shape of the meshes (11) of a first course-like section (A) is configured as a mirror image of the mesh and opening shape of the meshes (11) of a second course-like section (A).

4. Expanded metal (10) according to claim 3, **characterized in that** at least three course-like sections (A₁, A₂, A₃) are provided, a middle section (A₁) has meshes (11) with a first mesh and opening shape, and the meshes (11) of the courses located to each side of the middle section (A₂, A₃) are configured as a mirror image of one another with regard to the opening and mesh shape (Z).

5. Expanded metal (10) according to claim 1, **characterized in that** each mesh course (Z) has a mesh and opening shape that differs from adjacent courses (Z).

6. Expanded metal (10) according to claim 5, **characterized in that** the mesh and opening shapes of the respective mesh courses (Z) change from a first outer course (Z) having a mesh and opening shape that is distorted to a maximum extent in one direction, via a middle course (Z) having a symmetrical mesh and opening shape, to a second outer course (Z) having a mesh and opening shape that is distorted to a maximum extent in the opposite direction.

7. Cover for the interior fittings of a car, in particular for covering ventilation and blower openings, such as defrosters or air inlet vents, manufactured from an expanded metal sheet according to at least one of claims 1 to 6.

8. Cover according to claim 7, **characterized in that** the mesh and opening shape of individual mesh courses (Z) or the mesh and opening shape of the meshes (11) of course-like sections (A) determines the flow direction (16) of the air flowing through the cover.

9. Device for producing expanded metal according to any one of claims 1 to 6, comprising an advancing means which supplies a metal sheet in advancing steps to an expansion blade (14), wherein the expansion blade (14) has a horizontal movement component, which is guided in an alternating fashion transversely to the direction of advance of the metal sheet, and is provided with a plurality of teeth (15) which penetrate into the metal sheet under a vertical movement component in order to create the meshes (11), wherein the expansion blade (14) has teeth (15) with a different shape and/or orientation to adjacent teeth (15), **characterized in that** teeth (15) of identical shape and/or orientation are arranged in a grouped fashion, and **in that** the teeth (15) of a first group (Zg₁) are arranged or shaped as a mirror image of the teeth (15) of a second group (Zg₂).

10. Device according to the preamble of claim 9, **characterized in that** the orientation of the teeth (15) of the expansion blade (14) changes continuously starting from a first edge tooth (18), via a middle tooth (19), to a second edge tooth (18) which is arranged at a distance from the first edge tooth (18), wherein teeth (15) which are arranged at an equal distance from the middle tooth (19) are oriented as a mirror image of one another.

11. Device according to the preamble of claim 9, **characterized in that** the tooth shapes of the teeth (15) of the expansion blade (14) change continuously starting from a first edge tooth (18), via a middle tooth (19), to a second edge tooth (18) which is arranged at a distance from the first edge tooth (18), wherein teeth (15) which are arranged at an equal distance from the middle tooth (19) are shaped as a mirror image of one another.

## Revendications

1. Métal étiré (10), comprenant une feuille de tôle étirée avec des ouvertures en forme de mailles (11) pratiquées sensiblement sans aucune perte de matériau, lesquelles sont définies par la largeur (B) des mailles et la longueur (L) des mailles ainsi que la forme des mailles, et avec des traverses (12) encadrant les mailles, lesquelles sont définies par la largeur (Sb) des traverses et l'épaisseur (Sd) des traverses, dans lequel plusieurs mailles (11) sont disposées en bandes (Z) les unes derrière les autres et en rangées (X) les unes à côté des autres, **caractérisé en ce que** les bandes (Z) de premières mailles (11.1) se distinguent des bandes (Z) de deuxièmes mailles (11.2) les unes des autres par la largeur (B) des mailles et/ou la longueur (L) des mailles, de telle sorte que la feuille de métal étiré est munie d'ouvertures de différentes formes et de différentes formes des mailles.

2. Métal étiré (10) selon la revendication 1, **caractérisé en ce que** la feuille est divisée en sections en forme de bandes (A), dans lequel chaque section en forme de bande (A) comprend des bandes de (Z) de même forme de mailles et d'ouvertures.

3. Métal étiré (10) selon la revendication 2, **caractérisé en ce que** la forme de mailles et d'ouvertures des mailles (11) d'une première section en forme de bande (A) est réalisée en miroir par rapport à la forme de mailles et d'ouvertures des mailles (11) d'une deuxième section en forme de bande (A).

4. Métal étiré (10) selon la revendication 3, **caractérisé en ce qu'**au moins trois sections en forme de bandes (A₁, A₂, A₃) sont présentes, une section médiane (A₁) présente des mailles (11) d'une première forme de mailles et d'ouvertures et les mailles (11) des bandes disposées respectivement latéralement à la section médiane (A₂, A₃) sont réalisées en miroir en matière de forme (Z) d'ouvertures et de mailles les unes par rapport aux autres.

5. Métal étiré (10) selon la revendication 1, **caractérisé en ce que** chaque bande de mailles (Z) présente une forme de mailles et d'ouvertures divergente par rapport à des bandes (Z) adjacentes.

6. Métal étiré (10) selon la revendication 5, **caractérisé en ce que** les formes de mailles et d'ouvertures des bandes de mailles (Z) respectives évoluent depuis une première bande extérieure (Z) avec une forme de mailles et d'ouvertures déformée au maximum dans une direction, en passant par une bande médiane (Z) avec une forme de mailles et d'ouvertures symétrique, jusqu'à une deuxième bande extérieure (Z) avec une forme de mailles et d'ouvertures déformée au maximum dans la direction opposée.

7. Couvercle de protection pour l'équipement intérieur de voitures automobiles, en particulier pour protéger des ouvertures d'aération et de ventilation, tels des dégivreurs ou des entrées d'aération, fabriqué à partir d'une feuille de métal étiré selon au moins une des revendications 1 à 6.

8. Couvercle de protection selon la revendication 7, **caractérisé en ce que** la forme de mailles et d'ouvertures de bandes de mailles (Z) individuelles ou la forme de mailles et d'ouvertures des mailles (11) de sections en forme de bandes (A) définit la direction d'écoulement (16) de l'air traversant le couvercle de protection.

9. Dispositif de fabrication de métal étiré selon une des revendications 1 à 6 avec un étirage qui amène une tôle en métal dans des étapes d'étirage jusqu'à un couteau d'étirage (14), dans lequel le couteau d'étirage (14) présente une composante de déplacement dirigée en alternance horizontalement et transversalement à la direction de l'étirage de la tôle en métal et est muni d'une pluralité de dents (15) qui plongent dans la tôle en métal sous une composante de déplacement verticale pour produire des mailles (11), dans lequel le couteau d'étirage (14) présente des dents (15) de forme et/ou d'orientation différente par rapport à des dents adjacentes (15), **caractérisé en ce que** les dents (15) de même forme et/ou orientation sont disposées de manière groupée et **en ce que** les dents (15) d'un premier groupe (Zg₁) sont disposées ou façonnées en miroir par rapport aux dents (15) d'un deuxième groupe (Zg₂).

10. Dispositif selon le préambule de la revendication 9, **caractérisé en ce que** l'orientation des dents (15) du couteau d'étirage (14) change continuellement, à partir d'une première dent en bordure (18) en passant par une dent médiane (19) jusqu'à une deuxième dent en bordure (18) disposée à distance de la première dent en bordure (18), dans lequel des dents (15) éloignées à la même distance de la dent médiane (19) sont orientées en miroir les unes par rapport aux autres.

11. Dispositif selon le préambule de la revendication 9, **caractérisé en ce que** les formes des dents (15) du couteau d'étirage (14) changent continuellement, à partir d'une première dent en bordure (18) en passant par une dent médiane (19) jusqu'à une deuxième dent en bordure (18) disposée à distance de la première dent en bordure (18), dans lequel des dents (15) éloignées à la même distance de la dent médiane (19) sont façonnées en miroir les unes par rapport aux autres.
